Europäisches Patentamt

**European Patent Office**

Office européen des brevets

(19)

(11) Veröffentlichungsnummer : **0 024 515**
. **B1**

(12) **EUROPÄISCHE PATENTSCHRIFT**

(45) Veröffentlichungstag der Patentschrift :
**19.05.82**

(21) Anmeldenummer : **80103921.5**

(22) Anmeldetag : **09.07.80**

(51) Int. Cl.³ : **B 01 D 59/18**

(54) **Verfahren zum Herstellen von Trenndüsenelementen zur Trennung gas- oder dampfförmiger Gemische, insbesondere Isotopengemische, und nach diesem Verfahren hergestellte Trenndüsenelemente.**

(30) Priorität : **18.08.79 DE 2933570**

(43) Veröffentlichungstag der Anmeldung :
**11.03.81 (Patentblatt 81/10)**

(45) Bekanntmachung des Hinweises auf die Patenterteilung : **19.05.82 Patentblatt 82/20**

(84) Benannte Vertragsstaaten :
**FR GB IT NL SE**

(56) Entgegenhaltungen :
**DE - A - 2 009 265**
**DE - A - 2 823 032**
**FR - A - 2 035 356**

(73) Patentinhaber : **Kernforschungszentrum Karlsruhe GmbH**
**Weberstrasse 5**
**D-7500 Karlsruhe 1 (DE)**

(72) Erfinder : **Becker, Erwin-Willy, Prof. Dr.**
**Strählerweg 18**
**D-7500 Karlsruhe (DE)**
Erfinder : **Ehrfeld, Wolfgang, Dr. Dipl.-Phys.**
**Reutstrasse 27**
**D-7500 Karlsruhe (DE)**
Erfinder : **Krieg, Gunther, Dr. Dipl.-Phys.**
**Im Rennich 12**
**D-7500 Karlsruhe (DE)**
Erfinder : **Bier, Wilhelm, Dr. Dipl.-Phys.**
**Grabener Weg10**
**D-7514 Eggenstein-Leopoldshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

**Verfahren zum Herstellen von Trenndüsenelementen zur Trennung gas- oder dampfförmiger Gemische, insbesondere Isotopengemische, und nach diesem Verfahren hergestellte Trenndüsenelemente**

Beschreibung

Die Erfindung betrifft ein Verfahren zum Herstellen von Trenndüsenelement zur Trennung gasförmiger Gemische, insbesondere Isotopengemische, nach dem Oberbegriff des Anspruchs 1 und nach diesem Verfahren hergestellte Trenndüsenelemente.

Beim Trenndüsenverfahren ist der zy minimalem spezifischem Energieverbrauch führende Gasdruk zu den charakteristischen Abmessungen der Trennstruktur umgekehrt proportional (Chemie Ing. Technik 39 (1967) S.4.). Da die spezifischen Kosten der für die Ausführung des Verfahrens erforderlichen Kompressoren, Rohrleitungen und Ventile mit zunehmendem Gasdruck erheblich abnehmen, muß die Trenndüsenstruktur so klein wie möglich gewählt werden. Einem Einlaßdruck von z.B. 0,5 bar entspricht dabei eine Weite des Abschälerschlitzes von nur etwa 10 μm.

Zur Herstellung von Trenndüsen mit besonders kleinen charakteristischen Abmessungen ist es bekannt, diese aus einem Stapel gegenseitig ausgerichteter Folien aufzubauen, deren jede eine Vielzahl von Durchbrüchen von der Querschnittsform des Gaszuführungskanals, der gekrümmten Laval-Düse, des Abschälers und der Abfuhrkanäle aufweist (DE-B 20 09 265). In einer bevorzugten Ausführungsform werden die Durchbrüche in den Folien formgeätzt.

Bei der aus den erwähnten Gründen angestrebten weiteren Verkleinerung der Trenndüsenstrukturen steigen die Genauigkeitsanforderungen beim gegenseitigen Ausrichten der Folien entsprechend der Strukturverkleinerung an. Gleichzeitig nehmen, wegen der größer werdenden Druckdifferenzen zwischen den verschiedenen Bereichen der Trennstrukturen, die nicht völlig zu vermeidenden Leckströme längs der Folienoberflächen zu.

Der Erfindung liegt die Aufgabe zugrunde, ein Verfahren zum Herstellen von Trenndüsenelementen der eingangs erwähnten Art mit extrem kleinen charakteristischen Abmessungen zu finden, bei dem die mit dem Stapeln von Folien verbundenen, oben erwähnten Schwierigkeiten vermieden werden.

Für die Lösung dieser Aufgabe werden die im Kennzeichen der Ansprüche 1-7 enthaltenen Merkmale vorgeschlagen.

Mit dem erfindungsgemäßen Verfahren lassen sich noch bei den kleinsten für die technische Anwendung infrage kommenden Trennstrukturen so hohe Verhältnisse von Dicke der einzelnen Materialschichten zu engster Durchbruchweite (Aspektverhältnis) erzielen, daß die durch Toleranzen beim wiederholten gegenseitigen Ausrichten von Bestrahlungseinrichtung und zu bestrahlenden Bereichen entstehenden Versetzungen der Trenndüsenstrukturen die Trennleistung nicht wesentlich beeinträchtigen. Das schrittweise aufgebrachte Struktur-Material bildet einen homogenen Körper, in dem keine wesentlichen Leckströme auftreten.

Zur Verminderung des Ausrichtungsaufwandes kann es zweckmäßig sein, die mit Struktur-Material gefüllten Formschichten vor dem Aufbringen der nächsten Schicht aus Form-Material strahlungsunempfindlich zu machen, wie dies z.B. durch Behandeln mit Strahlen, mit Wärme oder auf chemischen Wege möglich ist. Durch diese Maßnahme wird erreicht, daß bei der Bestrahlung der neu aufgebrachten Form-Material-Schicht eine nachträgliche Fehlbestrahlung der vorhergehenden Form-Material-Schicht ohne Wirkung bleibt.

Der nach dem Verfahren der Erfindung hergestellte, die Trennstrukturen enthaltende Körper (« Trennkörper ») kann durch aufgepreßte, mit Gasführungskanälen versehene Platten abgeschlossen werden. Von besonderem Vorteil ist es jedoch, diese Platten mit den Kanälen für die Zu- und Abfuhr der Gasströme durch die Erzeugung entsprechender Formen und deren Auffüllung mit Struktur-Material nach dem Verfahren der Erfindung festhaftend auf den Trennkörper aufzubringen. Dadurch werden die Vorrichtungen zum Aufpressen eingespart und eventuelle Leckströme zwischen den Platten und dem Trennkörper vermieden.

Beim Aufbau von Trenndüsenelementen aus Folien müssen naturgemäß alle die Trennstruktur bildenden Materialteile räumlich zusammenhängen. Die Forderung nach räumlichem Zusammenhang führte insbesondere bei komplizierten Trenndüsenstrukturen, wie sie zur Verbesserung der Wirtschaftlichkeit des Trenndüsenverfahrens eingesetzt werden sollen, zu Einschränkungen bei der Festlegung der Strukturen und damit in manchen Fällen zu erheblichen technischen und wirtschaftlichen Nachteilen. Durch das Verfahren der Erfindung ist es möglich, Trenndüsenelemente der eingangs erwähnten Art mit extrem kleinen charakteristischen Abmessungen herzustellen, bei denen die einschränkende Forderung nach räumlichem Zusammenhang des die Trennstrukturen bildenden Materials entfällt. Dazu ist es lediglich erforderlich, den schrittweisen Aufbau des Trennkörpers auf einer Grundplatte, vorzugsweise einer der mit Kanälen für die Zu- und Abfuhr der Gasströme versehenen Abschlußplatten, durchzuführen.

Als energiereiche Strahlen können elektromagnetische Wellen verwendet werden, die zur Erzielung eines ausreichenden optischen Auflösungsvermögens Wellenlängen < 400 nm haben sollen. Besonders dicke Schichten verbunden mit hohem Aspektverhältnis lassen sich mit sog. weichen Röntgenstrahlen erzielen, deren Wellenlänge zwischen 0,1 und 10 nm liegt. Solche Strahlen lassen sich mit geeigneten Röntgenröhren, mit Elektronensynchrotrons oder mit einem durch einen Riesenimpulslaser erzeugten Mikroplasma erzeugen.

Während man bei der Verwendung elektromagnetischer Strahlen zur Erzeugung der gewünschten Strukturen in bekannter Weise mit Masken arbeitet, kann man bei Verwendung energiereicher Korpuskularstrahlen, insbesondere Elektronenstrahlen, die Strukturen im Form-Material auch durch elektromagnetische Steuerung erzeugen.

Als Material für die Formen sind verschiedene, z.B. bei der lithographischen Herstellung mikroelektronischer Schaltungen bereits bewährte Kunststoffe (Resists), beispielsweise PMMA (Polymethylmethacrylat), geeignet. Das partielle Entfernen von Material nach der Einwirkung der energiereichen Strahlen kann in diesem Fall beispielsweise durch Herauslösen mit Methylisobutylketon (MIBK) oder mit einer Mischung aus MIBK und Isopropylalkohol (IPA) erfolgen. Das vollständige Entfernen des Form-Materials gelingt z.B. mit Chlorbenzol oder Azeton.

Es ist aber auch möglich, zur Herstellung der Formen sog. Fotoformglas (modifiziertes Lithiumsilikat) oder Se-Ge-Gläser zu verwenden, bei denen das partielle Herauslösen mit verdünnter Säure oder Lauge erfolgt.

Das Auffüllen der Formen mit Struktur-Material kann auf verschiedene Weise, z.B. durch chemisches Abscheiden, Aufdampfen oder Aufsputtern erfolgen. Das Verfahren der Erfindung läßt sich mit besonders gutem technischen und wirtschaftlichen Erfolg durchführen, wenn als Form-Material ein elektrischer Nichtleiter der vorerwähnten Art, und als Material für den Trennkörper, die Grundplatte bzw. die Abschlußplatten ein elektrischer Leiter verwendet wird, und das Auffüllen der Formen galvanisch erfolgt.

Das erfindungsgemäße Verfahren und das erfindungsgemäße Trenndüsenelement wird im folgenden anhand der Zeichnungen beispielhaft erläutert :

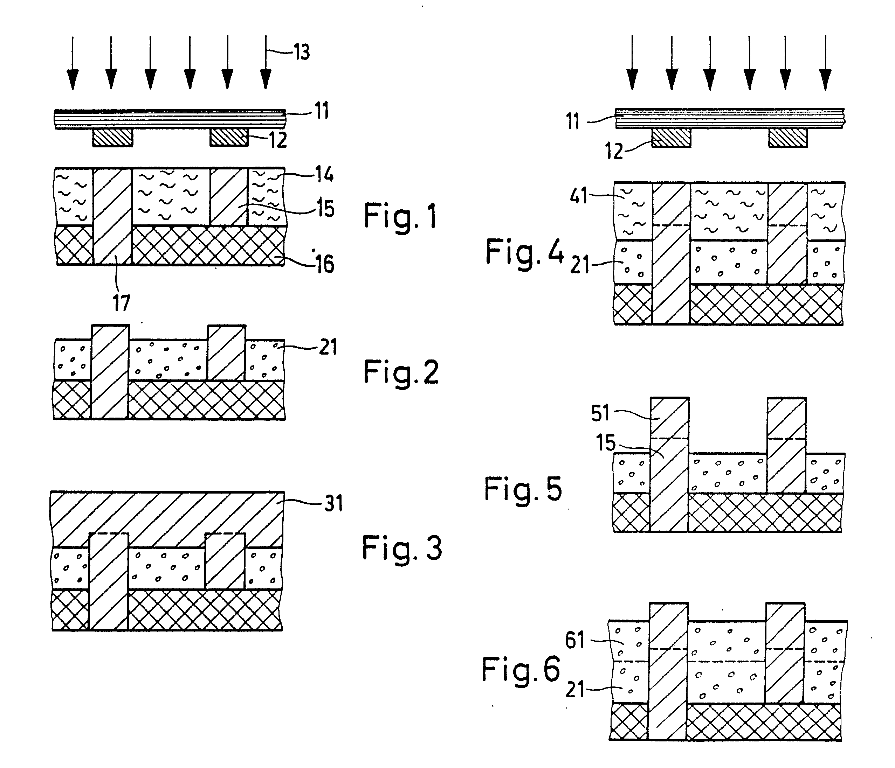

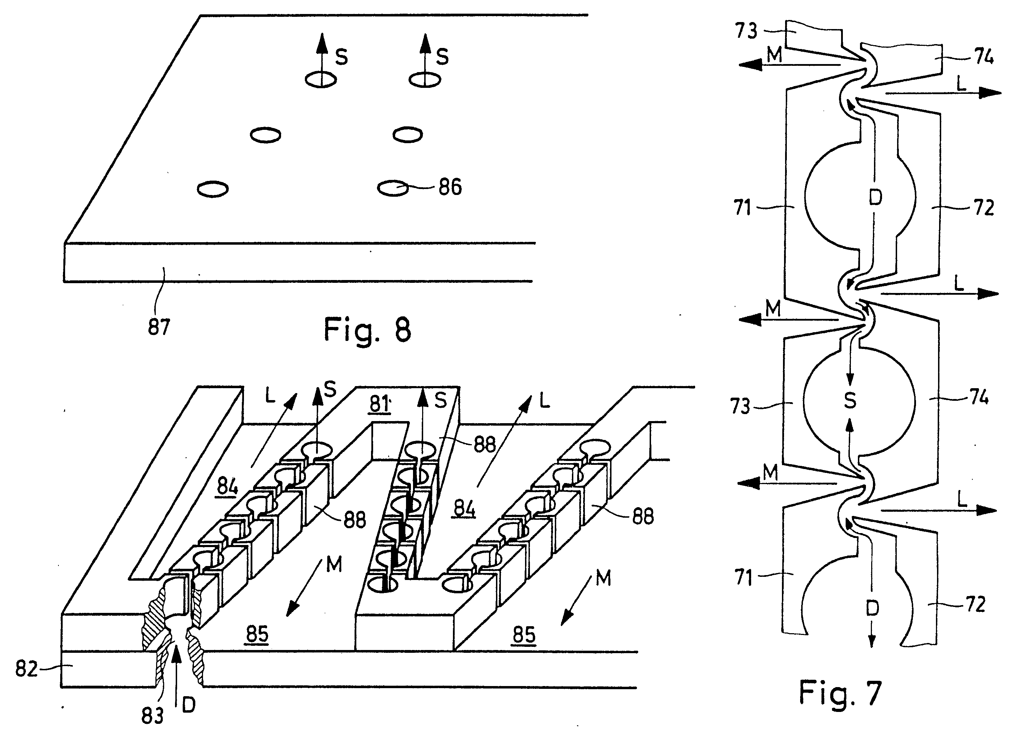

Die Figuren 1 bis 6 zeigen schematisch die einzelnen Bearbeitungsstufen, wobei die Trennstrukturen vereinfacht dargestellt sind. Die Figur 7 zeigt in der Draufsicht einen Ausschnitt eines erfindungsgemäß hergestellten Trennkörpers mit einem sog. « Doppelumlenksystem » als Trenndüsenstruktur, die Figur 8 zeigt in perspektivischer Darstellung ein erfindungsgemäß hergestelltes Trenndüsenelement mit abgehobener Abschlußplatte unter Verwendung eines Trennkörpers gemäß Figur 7.

Beim Vorgehen gemäß Figur 1 bis 6 wird als Form-Material ein sog. Positiv-Resist, z.B. PMMA, verwendet, dessen Löslichkeit durch Bestrahlen erhöht wird. Die Maske gemäß Figur 1 besteht aus einem die Strahlen nur schwach absorbierenden Träger 11 und den darauf aufgebrachten, die Strahlen stark absorbierenden Strukturen 12, die den Querschnittsformen der Trennstrukturen entsprechen. Die Pfeile 13 symbolisieren die Strahlen. Die Gebiete 14 stellen das durch das Bestrahlen löslich gemachte Form-Material dar, während die Gebiete 15 den von den Strahlen nicht erreichten und daher unlöslich gebliebenen Bereich des Form-Materials bilden. Die Form-Material-Schicht ist auf einer elektrisch leitfähigen Grundplatte 16 aufgebracht. Diese Platte ist mit Kanälen 17 für die Zu- bzw. Abfuhr der Gasströme durchzogen, so daß sie gleichzeitig eine der Abschlußplatten bildet.

Nach dem partiellen Bestrahlen gemäß Figur 1 werden die bestrahlten Gebiete 14 des Form-Materials herausgelöst, so daß eine Formschicht, bestehend aus dem unbestrahlten Material 15 auf der Grundplatte 16, entsteht, die gemäß Figur 2 galvanisch weitgehend mit Struktur-Material 21, z.B. Nickel, aufgefüllt wird.

In Figur 3 ist die der Strahlenquelle zugewandte Oberfläche erneut mit Form-Material 31 beschichtet. Nach erneutem Ausrichten der Maske 11, 12 wird diese Schicht 31 gemäß Figur 4 partiell bestrahlt, wobei lösliche Bereiche 41 entstehen, die über dem Struktur-Material 21 liegen. Durch Herauslösen der Bereiche 41 entsteht gemäß Figur 5 eine neue Formschicht 51, die die Formschicht 15 fortsetzt.

Figur 6 zeigt den Zustand nach erneutem galvanischem Abscheiden von Struktur-Material 61, das mit dem Struktur-Material 21 einen homogenen Körper bildet. Dieses schrittweise Vorgehen wird solange wiederholt, bis der Trennkörper seine vorgegebene Dicke erreicht hat. Anschließend wird das gesamte Form-Material herausgelöst.

Die gestrichelten Linien in den Figuren 1 bis 6 symbolisieren die Grenzen der Fertigungsschritte zwischen Bereichen mit einheitlichem Material.

In manchen Fällen kann es zweckmäßig sein, an Stelle des im Ausführungsbeispiel gemäß Figuren 1 bis 6 verwendeten Positiv-Resists einen Negativ-Resist zu verwenden, dessen Löslichkeit durch Bestrahlen vermindert wird. Die stark absorbierenden Strukturen der Maske müssen dann das Negativ der Querschnittsformen der Trennstrukturen darstellen. Die Entscheidung, mit welchem Resisttyp am zweckmäßigsten gearbeitet wird, hängt u.a. von der Form und der gewünschten Anordnung der Trennstrukturen ab.

Bei den in Figur 7 verwendeten Doppelumlenksystemen wird das zu trennende Stoffgemisch D durch zweimalige, gegensinnige Umlenkung mit jeweils sich anschließender Aufteilung in die Fraktionen L, M, S zerlegt. Die leichte Fraktion L enthält den höchsten Anteil an leichten Komponenten, die mittlere Fraktion M entspricht in ihrer Zusammensetzung etwa der des zu trennenden Stoffgemisches D, während die schwere Fraktion S den höchsten Anteil an schweren Komponenten enthält. Wie aus Figur 7 zu ersehen ist, hängen die den Trennkörper bildenden Teile 71, 72, 73 und 74 räumlich nicht miteinander zusammen. Ihre gegenseitige Ausrichtung wird ausschließlich über eine nicht dargestellte Grundplatte, auf der sie freistehend aufgebaut sind, gewährleistet. Die gezeigte Anordnung hat den Vorteil, daß die Zuführung des zu trennende Stoffgemisches D und die Abführung der schweren Fraktionen S für zwei benachbarte Trenndüsensysteme jeweils gemeinsam erfolgt, was den Platzbedarf für die Gasführungsleitungen bei vorgegebenem Druckverlust wesentlich vermindert. Außerdem gelangen die leichte und die mittlere Fraktion auf kürzesten Wegen in die angrenzenden Gassammelräume. Es ist unmittelbar ersichtlich, daß diese vorteilhafte Art der Gasführung durch den freistehenden Aufbau ermöglicht wird.

Bei dem in Figur 8 gezeigten Trenndüsenelement ist der Trennkörper 81 zickzack-förmig auf der Grundplatte 82 angeordnet. Die Grundplatte 82 ist von Kanälen 83 durchdrungen, durch die der Trennkörper 81 mit dem zu trennenden gasförmigen Stoffgemisch (Pfeil D) versorgt wird. Der Trennkörper 81 zerlegt das Stoffgemisch D in die Fraktion L, M, S. Die Fraktion L strömt in die zur Rückseite hin geöffneten, aus den Schenkeln 88 und den Abschlußplatten 82, 87 gebildeten V-förmigen Gassammelräume 84. Die Fraktion M strömt in die zur Vorderseite hin geöffneten, ebenfalls V-förmigen Gassammelräume 85. Die Fraktion S strömt nach oben in die Kanäle 86 der oberen in der Figur abgehobenen Abschlußplatte 87. Die in den Schenkeln 88 des Trennkörpers eingearbeiteten Trennstrukturen sind aus Gründen der besseren Übersichtlichkeit stark vereinfacht dargestellt und sollen nur das Prinzip der Führung der Gasströme verdeutlichen.

In Figur 7 haben benachbarte Trenndüsenstrukturen gemeinsame, innerhalb des Trennkörpers verlaufende Gasführungsleitungen für das zu trennende Stoffgemisch D und die schwere Fraktion S. In manchen Fällen kann es zweckmäßig sein, im Rahmen der Erfindung andere Anordnungen zu wählen. Z.B. kann man die Trennstrukturen so anorden, daß die gemeinsamen Gasführungsleitungen jeweils für die Abführung der leichten bzw. mittleren Fraktionen verwendet werden können. Die Zuführung des zu trennenden Gemisches und die Abführung der schweren Fraktionen erfolgt dann über die Gassammelräume 84 bzw. 85. Die Entscheidung, mit welcher Anordnung gearbeitet wird, hängt u.a. von der vorgesehenen Art des Einbaus der Trenndüsenelemente in die technischen Trenneinrichtungen ab.

## Ansprüche

1. Verfahren zum Herstellen eines aus einem Trennkörper mit Abschlußplatten bestehenden Trenndüsenelements zur Trennung gas- oder dampfförmiger Gemische, insbesondere Isotopengemische, bei dem die den Trennkörper durchsetzenden Trennstrukturen aus Trennräumen und Gasführungsleitungen bestehen und die Abschlußplatten mit Kanälen für die Zu- und Abfuhr der Gasströme versehen sind, dadurch gekennzeichnet, daß der Trennkörper schrittweise hergestellt wird, indem aus einem durch energiereiche Strahlung in ihrer Eigenschaft veränderbaren Materialschicht (Form-Material) durch partielles Bestrahlen und partielles Entfernen von Form-Material unter Ausnützung der durch die Bestrahlung erzeugten unterschiedlichen Materialeigenschaften die Trennstrukturen enthaltenden Formschichten hergestellt werden, die mit einem mit dem Gasgemisch verträglichen Material (Struktur-Material) aufgefüllt werden, worauf die der Strahlenquelle zugewandte Oberfläche wiederholt so oft mit Form-Material beschichtet und der sich hieran anschließende Vorgang des partiellen Bestrahlens und Entfernens von Form-Material und Auffüllens mit Struktur-Material so oft wiederholt wird, bis der Trennkörper eine vorgegebene Höhe erreicht hat, wonach das restliche Form-Material entfernt wird.

2. Verfahren nach Anspruch 1, dadurch gekennzeichnet, daß die mit Struktur-Material gefüllten Formschichten vor dem Aufbringen der nächsten Schicht aus Form-Material strahlungsunempfindlich gemacht werden.

3. Verfahren nach den Ansprüchen 1 oder 2, dadurch gekennzeichnet, daß die Abschlußplatten mit den Kanälen für die Zu- und Abfuhr der Gasströme auf den Trennkörper durch Erzeugung entsprechender Formen aus Formmaterial und deren Auffüllung mit Struktur-Material sowie Entfernen des restlichen Form-Materials gemäß den Verfahrensmaßnahmen für die Herstellung des Trennkörpers nach Anspruch 1 festhaftend aufgebracht werden.

4. Verfahren nach Anspruch 1 bis 3, dadurch gekennzeichnet, daß der schrittweise Aufbau des Trennkörpers auf einer Grundplatte, vorzugsweise einer der mit Kanälen für die Zu- und/oder Abfuhr der Gasströme versehenen Abschlußplatten, durchgeführt wird.

5. Verfahren nach Anspruch 1, dadurch gekennzeichnet, daß als energiereiche Strahlen elektromagnetische Wellen mit Wellenlängen < 400 nm, insbesondere weiche Röntgenstrahlen verwendet werden.

6. Verfahren nach Anspruch 1, dadurch gekennzeichnet, daß als energiereiche Strahlen Korpuskularstrahlen, insbesondere Elektronenstrahlen, verwendet werden.

7. Verfahren nach Anspruch 1 bis 4, dadurch gekennzeichnet, daß als Form-Material ein elektrischer Nichtleiter, als Struktur-Material und als Material für die Grundplatte bzw. die Abschlußplatten ein elektrischer Leiter verwendet wird, und das Auffüllen der Formen galvanisch erfolgt.

8. Trenndüsenelement, hergestellt mit dem Verfahren nach den Ansprüchen 1 bis 7, dadurch gekennzeichnet, daß benachbarte Trenndüsenstrukturen gemeinsame, innerhalb des Trennkörpers verlaufende Gasführungsleitungen besitzen.

9. Trenndüsenelement nach Anspruch 8, gekennzeichnet durch einen Trennkörper mit zickzackförmiger Gestalt, in dessen Schenkeln die Trennstrukturen eingearbeitet sind und bei dem die aus den Schenkeln und Abschlußplatten gebildeten V-förmigen Gassammelräume abwechselnd zwei verschiedenen Gasströmen zugeordnet sind.

## Claims

1. Method of fabricating a separation nozzle element consisting of a separation body with end plates for separating gaseous or vaporous mixtures, in particular isotopic mixtures, with the separating structures interspersed in the separation body consisting of separation spaces and gas ducts and the end plates provided with channels for the supply and evacuation of gas flows, characterized by the fact that the separation body is manufactured stepwise by manufacturing from a material layer (mould material), whose properties vary as a result of energetic radiation, by means of partial irradiation and partial removal of the mould material, and profiting from the different material properties generated by irradiation, the mould layers containing the separation structures, which are filled with a material compatible with the gas mixture (structural material), followed by repeated coating of the surface facing the radiation source with mould material so many times and repetition of the subsequent process of partial irradiation, removal of mould material and filling with structural material so many times until the separation body has attained a predetermined height whereupon the remaining mould material is removed.

2. Method according to Claim 1, with the mould layers filled with the structural material made to become insensitive to radiation before the next layer of mould material is applied.

3. Method according to Claim 1 or 2, with the end plates with the channels for the supply and evacuation of the gas flows applied so as to firmly adhere to the separation body, by producing appropriate moulds from mould material, filling them with structural material and removing the remaining mould material according to the measures employed in the process of manufacturing the separation body according to Claim 1.

4. Method according to Claims 1 through 3, with the stepwise construction of the separation body on a bottom plate, preferably an end plate provided with channels for the supply and/or evacuation of the gas flows.

5. Method according to Claim 1, with the energetic radiation being electromagnetic waves with wavelengths < 400 nm, especially soft X-rays.

6. Method according to Claim 1, with the energetic radiation used being corpuscular radiation, especially electron radiation.

7. Method according to Claims 1 through 4, with the mould material being an electric non-conductor, the structural material and the material for the bottom plate and the end plate, respectively, an electric conductor, and filling of the mould done by electroplating.

8. Separation nozzle element, produced by the method according to Claims 1 through 7, with the neighboring separation nozzle structures possessing common gas ducts running within the separation body.

9. Separation nozzle element according to Claim 8, with a separation body with zig-zag geometry, in the legs of which the separation structures have been incorporated and in which the V-shaped gas collecting spaces made up of the legs and end the plates are alternately assigned to two different gas flows.

## Revendications

1. Procédé pour la fabrication d'un mélange constituant des buses séparatrices comprenant un corps séparateur et des plaques de fermeture pour la séparation de mélanges sous forme de gaz ou de vapeurs, en particulier de mélanges isotopes, dans lequel les structures séparatrices contenues dans le corps séparateur sont constituées de chambres de séparation et de conduites de guidage du gaz, les plaques de fermeture étant pourvues de canaux pour l'arrivée et l'évacuation des courants gazeux, procédé caractérisé en ce que les corps séparateurs sont fabriqués par étapes, en préparant des couches de moulage contenant les structures séparatrices à partir d'une couche de matière (matière de moulage) dont on peut modifier les propriétés au moyen d'un rayonnement riche en énergie par irradiation partielle, et élimination partielle de cette matière de moulage en tirant parti des changements des propriétés de cette matière produits par l'irradiation, ces couches étant ensuite garnies avec un matériau (matériau de la structure compatible avec le mélange gazeux à la suite de quoi la surface tournée vers la source de rayonnement est revêtue, à plusieurs reprises, de matière de moulage, et l'opération consécutive d'irradiation partielle et d'élimination de la matière de moulage, puis de garnissage avec le matériau de structure est renouvelée, jusqu'à ce que le corps séparateur ait atteint une hauteur prescrite, la matière de moulage résiduelle étant alors éliminée.

2. Procédé suivant la revendication 1, caractérisé en ce que les couches de matière de moulage garnies de matériau de structure sont rendues insensibles à l'irradiation avant que l'on applique la couche suivante de matière de moulage.

3. Procédé suivant l'une des revendications 1 et 2, caractérisé en ce que les plaques de fermeture comportant les canaux d'arrivée et d'évacuation des courants gazeux sont appliquées de façon à adhérer fortement sur les corps séparateurs en produisant sur ceux-ci des moules appropriés en matière de moulage et en les garnissant de matériau de structure, puis en éliminant les restes de matière de moulage suivant des dispositions du procédé pour la fabrication du corps séparateur suivant la revendication 1.

4. Procédé suivant l'une quelconque des revendications 1 à 3, caractérisé en ce que la construction par étapes du corps séparateur est effectuée sur une plaque de base, de préférence sur une des plaques de fermeture pourvues de canaux pour l'arrivée et/ou l'évacuation des courants de gaz.

5. Procédé suivant la revendication 1, caractérisé en ce que, comme rayonnement riche en énergie on utilise des ondes électro-magnétiques ayant une longueur d'ondes inférieure à 400 nm, en particulier des rayons X mous.

6. Procédé suivant la revendication 1, caractérisé en ce que, comme rayonnement riche en énergie, on utilise des faisceaux corpusculaires, en particulier des faisceaux électroniques.

7. Procédé suivant l'une quelconque des revendications 1 à 4, caractérisé en ce que, comme matière de moulage, on utilise une matière non-conductrice de l'électricité, et comme matériau pour la structure et pour la plaque de base ou les plaques de fermeture, un matériau conducteur de l'électricité, et que le garnissage des moules s'effectue par galvanoplastie.

8. Elément constituant une buse séparatrice, fabriqué par le procédé décrit dans les revendications 1 à 7, caractérisé en ce que les structures de buses séparatrices adjacentes possèdent des conduites de passage de gaz communes qui s'étendent à l'intérieur du corps séparateur.

9. Elément constituant une buse séparatrice suivant la revendication 8, caractérisé en ce qu'il comporte un corps séparateur construit en forme de zig-zag, dans les joues duquel sont façonnées les structures séparatrices et dans lequel les chambres de collecte de gaz, réalisées en forme de V en utilisant les joues et les plaques de fermeture, sont associées alternativement à deux courants gazeux différents.

Fig. 1
Fig. 2
Fig. 3
Fig. 4
Fig. 5
Fig. 6

Fig. 8

Fig. 7

0 024 515